# FASCICULE DE BREVET EUROPEEN

(11) **EP 4 219 948 B1**
(45) Date de publication et mention de la délivrance du brevet: **09.07.2025**
(21) Numéro de dépôt: 23153000.7
(22) Date de dépôt: 24.01.2023
(51) Int. Cl.: F04D 7/04, F04D 15/00, F04D 29/66, F04D 13/08, F04D 29/22

(54) **POMPE À CAPTEUR DE VIBRATIONS ET SON PROCÉDÉ DE FABRICATION**
SCHWINGUNGSDÄMPFENDE PUMPE UND VERFAHREN ZU IHRER HERSTELLUNG
VIBRATION SENSOR PUMP AND METHOD FOR MANUFACTURING THE SAME

(30) Priorité: 01.02.2022 FR 2200894
(43) Date de publication de la demande: 02.08.2023
(73) Titulaire: KSB S.A.S, 92230 Gennevilliers (FR)
(72) Inventeur: KAMINSKI, Mateusz, 59120 Loos (FR); ROLAND, Hugues, 59270 Méteren (FR)
(74) Mandataire: Eidelsberg, Olivier Nathan

(56) Documents cités:
- EP-A1- 3 546 760
- WO-A2-2006/127939
- US-A1- 2014 086 765
- US-A1- 2020 049 152

## Description

La présente invention se rapporte aux pompes, notamment aux pompes de relevage des eaux usées.

Les eaux usées sont souvent chargées de lingettes ou tissus, qui provoquent des bouchages. On souhaite qu'une pompe ne se bouche pas et de ne pas avoir à intervenir manuellement pour la maintenir en état de fonctionnement optimal.

EP3546760 décrit un système qui transmet un niveau de vibrations à un utilisateur. Ce n'est pas une pompe autonome, mais un simple contrôle. La pompe n'agit pas d'elle-même.

WO 2006/127939 décrit un système pour éviter une vibration excessive d'une pompe. US 2014/086765, EP 3546760 et US 2020/049152 décrivent un système de contrôle d'une pompe.

L'invention vise une pompe, pourvue de moyens permettant de détecter précocement un danger de disfonctionnement de la pompe et de prendre elle-même les mesures adéquates pour y remédier.

La pompe suivant l'invention comprend un corps, enfermant par un couvercle amovible,
- un impulseur solidaire en rotation d'un arbre entraîné par un moteur électrique et entouré d'une volute ayant un orifice d'aspiration et une tubulure de refoulement entre lesquels se trouve l'impulseur,
- un dispositif de commande du moteur à variateur de fréquence,
- un capteur de vibration du type accéléromètre, monté sur une partie non tournante de la pompe et donnant des conformations de vibration,
- un dispositif informatique relié par fil d'une part au capteur de vibration et d'autre part au variateur de fréquence, de manière à analyser des conformations de vibration et à envoyer un signal de commande du moteur au variateur de fréquence en fonction de la conformation de vibration reçue du capteur de vibration, caractérisée en ce que le dispositif informatique a une mémoire et a une borne de communication permettant, lorsque le couvercle est retiré, de communiquer avec un dispositif extérieur de renseignement servant à renseigner initialement la mémoire par envoi de messages du dispositif extérieur au dispositif informatique, la communication de la borne de communication avec le dispositif extérieur étant interrompue lorsque le couvercle est remis alors que la pompe est en fonctionnement.

Le dispositif informatique a une partie d'analyse des conformations de vibration et une mémoire de mise en mémoire des conformations de vibration reçues, la partie d'analyse étant conçue pour, par comparaison d'une conformation de vibration reçue instantanée du capteur de vibration aux conformations de vibration déjà en mémoire, envoyer au variateur de fréquence un signal de commande du moteur identique à celui envoyé auparavant pour la conformation de vibration déjà en mémoire, qui ressemble le plus à celle instantanée reçue du capteur de vibration.

Un signal peut correspondre à un signal d'arrêt de la pompe. Un autre signal peut correspondre à un signal de fonctionnement nominal, un autre signal encore à un signal d'inversion du sens de rotation de l'impulseur pendant une durée donnée, correspondant à un nettoyage de la pompe. Un autre signal peut correspondre à un signal de ralentissement de la vitesse de rotation de l'impulseur, un autre signal à un signal d'augmentation de cette vitesse.

Lorsqu'une lingette passe dans la pompe, qui fonctionne normalement, l'accéléromètre envoie au dispositif informatique à mémoire une conformation de vibration instantanée analysée par une partie d'analyse du dispositif informatique. Si par comparaison elle est identique à une conformation de vibration qu'il a déjà en mémoire, le dispositif informatique envoie immédiatement au dispositif de commande un signal électrique de commande du moteur affecté à cette conformation de vibration déjà en mémoire. Si la conformation de vibration instantanée reçue de l'accéléromètre ne correspond pas exactement à une conformation de vibration déjà en mémoire, la partie d'analyse du dispositif informatique la compare aux conformations de vibrations déjà en mémoire, et envoie au dispositif de commande du moteur le signal électrique de commande correspondant au signal affecté à la conformation de vibration, qui ressemble le plus à la conformation de vibration instantanée reçue du capteur de vibration. Le dispositif de commande du moteur reçoit le signal de commande du moteur sans retard, sans avoir à passer intermédiairement par la détermination d'un facteur de charge d'un moteur électrique, qui prend du temps, comme proposé au WO 2013/096726.

Le cas échéant, si la conformation de vibration reçue du capteur de vibration est identique à une conformation de vibration déjà en mémoire, la partie d'analyse envoie le signal de commande du moteur au dispositif de commande du moteur, mais ne met pas cette conformation de vibration en mémoire. Suivant cette variante, la partie d'analyse néglige de traiter la conformation de vibration suivant immédiatement une conformation de vibration, lorsque les deux conformations sont identiques, pour ne pas charger inutilement la mémoire, cela s'applique notamment à une conformation à laquelle est attribué un signal correspondant à un fonctionnement nominal de la pompe.

La borne de communication sert à renseigner initialement la mémoire par envoi de messages, par exemple horodatés du dispositif extérieur au dispositif informatique.

Une conformation de vibration est représentative d'une variation ou courbe de variation des vibrations en fonction du temps pendant une durée définie à l'avance. Cette durée peut être comprise entre 10 ms et 500 ms, de préférence entre 20 ms et 250 ms, notamment entre 30 et 200 ms.

On peut utiliser l'amplitude des vibrations pour caractériser une conformation de vibration. La partie d'analyse peut transformer une conformation de vibration en un signal propre au traitement ou à l'analyse, par exemple par valeur efficace (RMS), kurtosis, variance et pour transformation en un ensemble de données.

Suivant un mode de réalisation, le dispositif informatique est sous la forme d'une carte facile à remplacer ou à compléter.

L'invention vise aussi un procédé de fabrication d'une pompe par création de son dispositif informatique, dans lequel on fabrique une pompe qui comprend un corps, enfermant par un couvercle amovible,

- un impulseur solidaire en rotation d'un arbre entraîné par un moteur électrique et entouré d'une volute ayant un orifice d'aspiration et une tubulure de refoulement entre lesquels se trouve l'impulseur,
- un dispositif de commande du moteur à variateur de fréquence,
- un capteur de vibration du type accéléromètre, monté sur une partie non tournante de la pompe et donnant des conformations de vibration, caractérisé en ce que l'on munit la pompe d'un dispositif informatique vierge relié par fil d'une part au capteur de vibration et d'autre part au variateur de fréquence, de manière à analyser des conformations de vibration et à envoyer un signal de commande du moteur au variateur de fréquence en fonction de la conformation de vibration reçue du capteur de vibration, le dispositif informatique a une mémoire et a une borne de communication permettant, lorsque le couvercle est retiré, de communiquer avec un dispositif extérieur de renseignement servant à renseigner initialement la mémoire par envoi de messages du dispositif extérieur au dispositif informatique, la communication de la borne de communication avec le dispositif extérieur étant interrompue lorsque le couvercle est remis alors que la pompe est en fonctionnement, on fait fonctionner la pompe, alors que le couvercle est retiré et que le dispositif informatique communique avec le dispositif extérieur, suivant un premier mode de fonctionnement, à partir d'un instant donné, pendant une première durée donnée, on transmet, dès cet instant immédiatement, les conformations de vibration qui s'ensuivent par la borne de communication du dispositif extérieur au dispositif informatique, en lui donnant en même temps instruction de les mettre en mémoire en leur attribuant un premier signal de commande du moteur correspondant au premier mode de fonctionnement, la durée écoulée, on fait fonctionner la pompe à partir d'une deuxième instant, différent du premier instant, pendant une durée égale à la première durée, alors que le couvercle est retiré et que le dispositif informatique communique avec le dispositif extérieur, suivant un deuxième mode de fonctionnement, différent du premier mode de fonctionnement, on transmet, dès ce deuxième instant immédiatement, les conformations de vibrations qui s'ensuivent par la borne de communication du dispositif extérieur au dispositif informatique, en lui donnant instruction de les mettre en mémoire en leur attribuant un deuxième signal de commande du moteur, différent du premier signal, correspondant au deuxième mode de fonctionnement, et on remet le couvercle sur le corps en empêchant ainsi toute communication du dispositif extérieur au dispositif informatique.

On réitère ces opérations de fabrication par fonctionnement, transmission et mise en mémoire jusqu' à ce qu'au moins une conformation de vibration, correspondant à chaque mode de fonctionnement envisagé, ait été respectivement mise dans la mémoire.

En effectuant ces opérations en usine, une fois pour toutes, pour la pompe, on fabrique une pompe suivant l'invention, qui, en fonctionnement, agira par elle-même en analysant elle-même, par le biais des vibrations qu'ils provoquent, les évènements ou fonctionnements auxquels elle est confrontée et en prenant immédiatement les décisions qui s'imposent tout en effectuant un apprentissage.

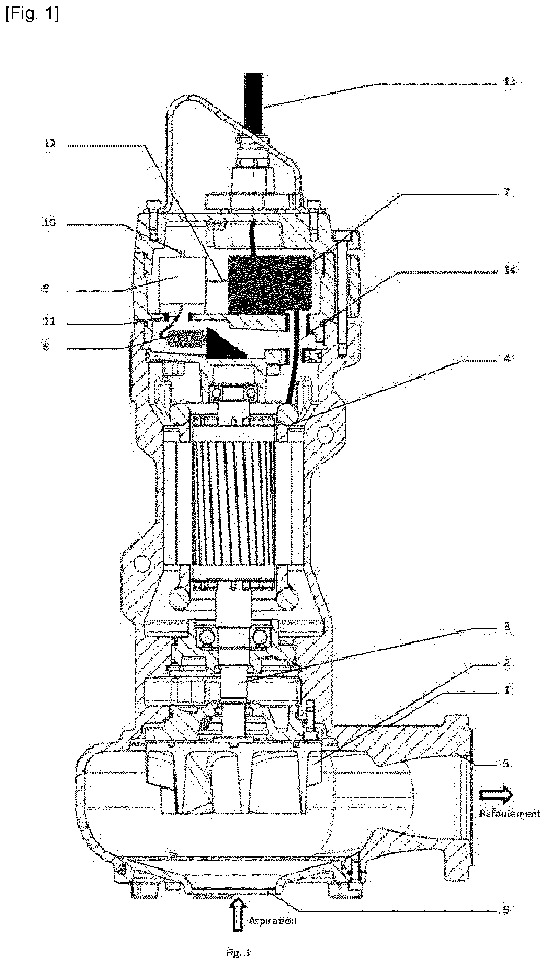

Au dessin annexé, donné uniquement à titre d'exemple, la figure unique est une vue en coupe d'une pompe suivant l'invention qui, en fonctionnement, agira elle-même en analysant les évènements ou modes de fonctionnement auxquels elle est confrontée et en prenant les bonnes décisions, tout en effectuant un apprentissage.

La pompe représentée à la figure comprend, fermé par un couvercle, un corps ayant une volute 1 ayant un orifice 5 d'aspiration et une tubulure 6 de refoulement des eaux usées, comme symbolisé par les flèches. La volute entoure un impulseur 2 solidaire en rotation d'un arbre 3 entraîné par un moteur 4 électrique, lui-même connecté à un variateur 7 de fréquence. Un accéléromètre 8 est monté dans la partie haute de la pompe formant compartiment pour le dispositif de commande du moteur et est relié à un dispositif 9 informatique ayant une borne 10 de communication avec un dispositif extérieur non représenté. L'accéléromètre est relié au dispositif informatique par un fil 11. Le variateur 7 de vitesse est relié au dispositif informatique par un fil 12. Le moteur 4 est alimenté en énergie électrique par un câble 13 d'alimentation par l'intermédiaire du variateur 7 de fréquence et d'un fil 14.

En usine, on enlève le couvercle de la partie haute, pour accéder à la borne de renseignement 10 et on renseigne la mémoire du dispositif 9 informatique de manière à ce que, lorsque la pompe sera mise en fonctionnement chez l'usager, le dispositif informatique dispose, dans la mémoire, de suffisamment de renseignements, c'est-à-dire de conformations de vibration, pour pouvoir les comparer à une conformation de vibration lui arrivant nouvellement de l'accéléromètre 8. La pompe est ainsi intelligente et est apte à faire soi-même son apprentissage.

## Revendications

1. Pompe qui comprend un corps enfermant, par un couvercle,
- un impulseur (2) solidaire en rotation d'un arbre (3) entraîné par un moteur (4) électrique et entouré d'une volute (1) ayant un orifice (5) d'aspiration et une tubulure (6) de refoulement entre lesquels se trouve l'impulseur (2),
- un dispositif de commande du moteur à variateur (7) de fréquence,
- un capteur (8) de vibration du type accéléromètre, monté sur une partie non tournante de la pompe et donnant des conformations de vibration,
- un dispositif (9) informatique relié par fil d'une part au capteur (8) de vibration et d'autre part au variateur (7) de fréquence, de manière à analyser des conformations de vibration et à envoyer un signal de commande du moteur (4) au variateur (7) de fréquence en fonction de la conformation de vibration reçue du capteur (8) de vibration, le dispositif (9) informatique ayant une mémoire **caractérisée en ce que** le couvercle est amovible et le dispositif informatique a une borne de communication permettant, lorsque le couvercle est retiré, de communiquer avec un dispositif extérieur de renseignement servant à renseigner initialement la mémoire par envoi de messages du dispositif extérieur au dispositif informatique, la communication de la borne de communication avec le dispositif extérieur étant interrompue lorsque le couvercle est remis alors que la pompe est en fonctionnement.

2. Pompe suivant la revendication 1, **caractérisée en ce que** le dispositif (9) informatique a une partie d'analyse des conformations de vibration et la mémoire de mise en mémoire des conformations de vibration reçues, la partie d'analyse étant conçue pour, par comparaison d'une conformation de vibration instantanée reçue du capteur (8) de vibration aux conformations de vibration déjà en mémoire, envoyer au variateur (2) de fréquence un signal de commande du moteur (4) identique à celui envoyé auparavant pour la conformation de vibration déjà en mémoire, qui ressemble le plus à celle instantanée reçue du capteur (8) de vibration.

3. Pompe suivant la revendication 1 ou 2, **caractérisée en ce qu'**un signal peut correspondre à un signal d'arrêt de la pompe, à un signal de fonctionnement nominal, à un signal d'inversion du sens de rotation de l'impulseur (2) pendant une durée donnée, à un signal de ralentissement de la vitesse de rotation de l'impulseur (2) ou à un signal d'augmentation de la vitesse de rotation de l'impulseur (2).

4. Pompe suivant l'une des revendications précédentes, **caractérisé en ce que** le dispositif (9) informatique est sous la forme d'une carte.

5. Pompe suivant l'une des revendications 1 à 4, **caractérisée en ce que** le corps est subdivisé en un compartiment pour le dispositif de commande du moteur (4), un compartiment pour le moteur et en un compartiment pour l'impulseur (2) et le dispositif (9) informatique est logé dans le compartiment de commande du moteur (4).

6. Pompe suivant la revendication 1, **caractérisé en ce que** c'est une pompe de relevage des eaux usées.

7. Procédé de fabrication d'une pompe suivant l'une des revendications précédentes, par création de son dispositif (9) informatique, dans lequel on fabrique une pompe qui comprend un corps, enfermant par un couvercle amovible,
- un impulseur (2) solidaire en rotation d'un arbre (3) entraîné par un moteur (4) électrique et entouré d'une volute (1) ayant un orifice (5) d'aspiration et une tubulure (6) de refoulement entre lesquels se trouve l'impulseur (2),
- un dispositif de commande du moteur à variateur (7) de fréquence,
- un capteur (8) de vibration du type accéléromètre, monté sur une partie non tournante de la pompe et donnant des conformations de vibration, **caractérisé en ce que** l'on munit la pompe d'un dispositif (9) informatique vierge relié par fil d'une part au capteur (8) de vibration et d'autre part au variateur (7) de fréquence, de manière à analyser des conformations de vibration et à envoyer un signal de commande du moteur (4) au variateur (7) de fréquence en fonction de la conformation de vibration reçue du capteur (8) de vibration, le dispositif (9) informatique a une mémoire et a une borne (10) de communication permettant, lorsque le couvercle est retiré, de communiquer avec un dispositif extérieur de renseignement servant à renseigner initialement la mémoire par envoi de messages du dispositif extérieur au dispositif informatique, la communication de la borne de communication avec le dispositif extérieur étant interrompue lorsque le couvercle est remis alors que la pompe est en fonctionnement, on fait fonctionner la pompe alors que le couvercle est retiré et que le dispositif (9) informatique communique avec le dispositif extérieur, suivant un premier mode de fonctionnement, à partir d'un instant donné, pendant une première durée donnée, on transmet, dès cet instant immédiatement, les conformations de vibration qui s'ensuivent par la borne (10) de communication du dispositif extérieur au dispositif (9) informatique, en lui donnant en même temps instruction de les mettre en mémoire en leur attribuant un premier signal de commande du moteur (4) correspondant au premier mode de fonctionnement, la durée écoulée, on fait fonctionner la pompe à partir d'une deuxième instant, différent du premier instant, pendant une durée égale à la première durée, alors que le couvercle est retiré et que le dispositif (9) informatique communique avec le dispositif extérieur, suivant un deuxième mode de fonctionnement, différent du premier mode de fonctionnement, on transmet, dès ce deuxième instant immédiatement, les conformations de vibrations qui s'ensuivent par la borne (10) de communication du dispositif extérieur au dispositif (9) informatique, en lui donnant instruction de les mettre en mémoire en leur attribuant un deuxième signal de commande du moteur (4), différent du premier signal, correspondant au deuxième mode de fonctionnement, et on remet le couvercle sur le corps en empêchant ainsi toute communication du dispositif (9) informatique avec le dispositif extérieur.

## Patentansprüche

1. Pumpe mit einem Gehäuse, das durch einen Deckel verschlossen ist,
einem Laufrad (2), das mit einer von einem Elektromotor (4) angetriebenen Welle (3) drehfest verbunden ist, und von einem Spiralgehäuse (1) umgeben ist, das eine Ansaugöffnung (5) und einen Druckstutzen (6) aufweist, zwischen denen sich das Laufrad (2) befindet,
einer Vorrichtung zur Steuerung des Motors mit einem Frequenzumrichter (7),
einem Schwingungssensor (8) vom Typ Beschleunigungsmesser, der an einem nicht drehenden Teil der Pumpe angebracht ist und Schwingungsformen liefert,
einer Computervorrichtung (9), die einerseits mit dem Schwingungssensor (8) und andererseits mit dem Frequenzumrichter (7) verbunden ist, um Schwingungsformen zu analysieren und ein Steuersignal für den Motor (4) an den Frequenzumrichter (7) in Abhängigkeit von dem vom Schwingungssensor (8) empfangenen Vibrationsmuster zu senden, wobei die Computervorrichtung (9) einen Speicher aufweist,
**dadurch gekennzeichnet, dass** der Deckel abnehmbar ist und die Computervorrichtung
einen Kommunikationsanschluss hat, der es bei abgenommenem Deckel ermöglicht, mit einer externen Auskunftsvorrichtung zu kommunizieren, die dazu dient, den Speicher durch Senden von Nachrichten von der externen Vorrichtung an die Computervorrichtung anfänglich zu füllen, wobei die Kommunikation des Kommunikationsanschlusses mit der externen Vorrichtung unterbrochen wird, wenn der Deckel wieder aufgesetzt wird, während die Pumpe in Betrieb ist.

2. Pumpe nach Anspruch 1, **dadurch gekennzeichnet, dass** die Computervorrichtung (9) einen Analyseteil zum Analysieren der Schwingungsformen und den Speicher zum Speichern der empfangenen Schwingungsformen aufweist, wobei das Analyseteil dazu ausgelegt ist, durch Vergleich einer vom Schwingungssensor (8) empfangenen momentanen Schwingungsform mit bereits gespeicherten Schwingungsformen ein Motorsteuersignal (4) an den Frequenzumrichter (2) zu senden, das mit dem zuvor für die bereits gespeicherte Schwingungsform gesendeten Signal identisch ist, die der vom Schwingungssensor (8) empfangenen momentanen Schwingungsform am ähnlichsten ist.

3. Pumpe nach Anspruch 1 oder 2, **dadurch gekennzeichnet, dass** ein Signal ein Stopp-Signal der Pumpe, einem Nennbetriebs-Signal, einem Signal zur Umkehrung der Drehrichtung des Laufrades (2) für eine bestimmte Zeitdauer, einem Signal zur Verlangsamung der Drehzahl des Laufrades (2) oder einem Signal zur Erhöhung der Drehzahl des Laufrades (2) entsprechen kann.

4. Pumpe nach einem der vorhergehenden Ansprüche, **dadurch gekennzeichnet, dass** die Computervorrichtung (9) in Form einer Karte vorliegt.

5. Pumpe nach einem der Ansprüche 1 bis 4, **dadurch gekennzeichnet, dass** das Gehäuse in einen Raum für die Motorsteuerung (4), einen Raum für den Motor und einen Raum für das Laufrad (2) unterteilt ist, und wobei die Computervorrichtung (9) im Raum für die Motorsteuerung (4) untergebracht ist.

6. Pumpe nach Anspruch 1, **dadurch gekennzeichnet, dass** sie eine Abwasserhebepumpe ist.

7. Verfahren zur Herstellung einer Pumpe gemäß einem der vorstehenden Ansprüche, wobei ein Schwingungssensor (8) vom Typ eines Beschleunigungsmessers an einem nicht rotierenden Teil der Pumpe angebracht ist und Schwingungsformen liefert, **dadurch gekennzeichnet, dass**
die Pumpe mit einer leeren Computervorrichtung (9) versehen ist, die einerseits mit dem Schwingungssensor (8) und andererseits mit dem Frequenzumrichter (7) verbunden ist, um Schwingungsformen zu analysieren und dem Frequenzumrichter (7) ein Steuersignal für den Motor (4) entsprechend der Schwingungsform zu senden, andererseits mit dem Frequenzumrichter (7) verbunden ist, um Schwingungsformen zu analysieren und in Abhängigkeit von der vom Schwingungssensor (8) empfangenen Schwingungsform ein Steuersignal für den Motor (4) an den Frequenzumrichter (7) zu senden,
wobei die Computervorrichtung (9) einen Speicher und einen Kommunikationsanschluss (10) aufweist, der bei abgenommenem Deckel die Kommunikation mit einer externen Computervorrichtung ermöglicht, und dazu dient, den Speicher durch Senden von Nachrichten von der externen Vorrichtung an die Computervorrichtung zu initialisieren, wobei die Kommunikation des Anschlusses mit der externen Vorrichtung unterbrochen wird, wenn die Schwingungsform des Sensors (8) einen vorbestimmten Wert erreicht, und um mit einer externen Auskunftsvorrichtung zu kommunizieren, die dazu dient, den Speicher durch Senden von Nachrichten von der externen Vorrichtung an die Computervorrichtung zunächst zu versorgen, wobei die Kommunikation des Kommunikationsanschlusses mit der externen Vorrichtung unterbrochen wird, wenn der Deckel bei laufender Pumpe wieder aufgesetzt wird, wobei die Pumpe bei abgenommenem Deckel und bei Kommunikation der Computervorrichtung (9) mit der externen Vorrichtung in einer ersten Betriebsart betrieben wird, ab einem bestimmten Zeitpunkt während einer ersten bestimmten Zeitdauer die folgenden Schwingungsformen über den Kommunikationsanschluss (10) der externen Vorrichtung an die Computervorrichtung (9) übertragen werden, wobei gleichzeitig der Befehl erteilt wird, diese unter Zuweisung eines ersten Steuersignals für den Motor (4) entsprechend der ersten Betriebsart zu speichern, wobei die Pumpe ab einem zweiten Zeitpunkt, der sich vom ersten Zeitpunkt unterscheidet, während einer Dauer, die der ersten Dauer entspricht, während der Deckel entfernt ist und die Computervorrichtung (9) mit der externen Vorrichtung kommuniziert, gemäß einer zweiten Betriebsart betrieben wird, und wobei ab diesem zweiten Zeitpunkt unverzüglich die sich daraus ergebenden Schwingungsformen über den Kommunikationsanschluss (10) der externen Vorrichtung an die Computervorrichtung (9) übertragen wird, wobei diese angewiesen wird, sie unter Zuweisung eines zweiten, vom ersten Signal unterschiedlichen Steuersignals für den Motor (4), das der zweiten Betriebsart entspricht, zu speichern, und wobei der Deckel wieder auf den Körper aufgesetzt wird, wodurch jede Kommunikation der Computervorrichtung (9) mit der externen Vorrichtung verhindert wird.

## Claims

1. Pump comprising a body enclosing within a cover:
- An impeller (2) rotating with a shaft (3) driven by an electric motor (4) and surrounded by a casing (1) with an inlet orifice (5) and an outlet tube (6) between which lies the impeller (2),
- A motor control device with a frequency converter (7),
- An accelerometer type vibration sensor (8), mounted on a non-rotating part of the pump that produces vibration forms,
- A computing device (9) connected by cable firstly to the vibration sensor (8) and secondly to the frequency converter (7), in such a manner as to analyse the vibration forms and send a control signal for the motor (4) to the frequency converter (7) that is a function of the vibration form received from the vibration sensor (8), the computing device (9) has a memory **characterised in that** the cover is removable and the computing device has a communication terminal enabling it, when the cover is removed, to communicate with an external information device used to initialise the memory by sending messages from the external device to the computing device, communication from the communication terminal with the external device being interrupted when the cover is replaced while the pump is running.

2. Pump according to claim 1, **characterised in that** the computing device (9) has a vibration form analysis section and the memory to save the vibration forms received, the analysis section being designed so that, by comparing an instantaneous vibration form received from the vibration sensor (8) with vibration forms saved in the memory, it sends to the frequency converter (2) a motor (4) control signal identical to that sent previously for the vibration form saved in the memory that most closely resembles the instantaneous value received from the vibration sensor (8).

3. Pump according to claim 2, **characterised in that** a signal may correspond to a pump stop signal, a normal operation signal, a signal for reversal of the direction of rotation of the impeller for a given period, a signal to reduce the speed of rotation of the impeller or a signal to increase the speed of rotation of the impeller.

4. Pump according to claim 1, **characterised in that** the computing device is in the form of a card.

5. Pump according to claim 1, **characterised in that** the body is subdivided into a compartment for the motor control device, a compartment for the motor and a compartment for the impeller and the computing device is housed in the motor control compartment.

6. Pump according to claim 1, **characterised in that** it is a wastewater pump.

7. Method for producing a pump according to one of the preceding claims by building its computing device (9), in which a pump is produced that comprises a body, enclosing by a removable cover:
- An impeller (2) rotating with a shaft (3) driven by an electric motor (4) and surrounded by a casing (1) with an inlet orifice (5) and an outlet tube (6) between which lies the impeller (2),
- A motor control device with a frequency converter (7),
- An accelerometer type vibration sensor (8), mounted on a non-rotating part of the pump that generates vibration forms, **characterised in that** the pump is fitted with a pristine computing device (9) connected by cable firstly to the vibration sensor (8) and secondly to the frequency converter (7), in such a manner as to analyse the vibration forms and send a control signal for the motor (4) to the frequency converter (7) that is a function of the vibration form received from the vibration sensor (8) in which the computing device (9) has a memory and a communication terminal (10) which permits, when the cover is removed, to communicate with an external information device, for initially informing the memory by sending messages from the external to the computing device, in which the communication of the communication terminal with the external device is interrupted when the cover is replaced, while the pump is operating, in which the pump is operating while the cover is removed and the computing device (9) is communicating with the external device, according to a first mode of operation, starting from a first moment, for a first given period, immediately after this first moment, subsequent vibration forms are sent by the communication terminal (10) from the external device to the computing device (9), at the same time giving it instructions to save them in memory, assigning to them a first motor (4) control signal corresponding to the first mode of operation, after the first period has elapsed, the pump is then started at a second moment, different from the first moment, for a second period equal to the first period, while the cover is removed and the computing device (9) is communicating with the external device according to a second mode of operation, different from the first mode of operation, immediately after this second moment, subsequents vibration forms are sent by the communication terminal (10) from the external device to the computing device (9), instructing it to save them to the memory, assigning to them a second motor (4) control signal, different from the first signal and corresponding to the second mode of operation, the cover is then replaced on the body thus preventing any communication of the computing device (9) with the external device.
